# EUROPÄISCHE PATENTANMELDUNG

(11) **EP 4 238 904 A1**
(43) Veröffentlichungstag der Anmeldung: **06.09.2023**
(21) Anmeldenummer: 22160003.4
(22) Anmeldetag: 03.03.2022
(51) Int. Cl.: B65G 1/04, B65G 57/30

(54) **BLOCKLAGERANORDNUNG**

(71) Anmelder: Jungheinrich Aktiengesellschaft, 22047 Hamburg (DE)
(72) Erfinder: Becker, Michael, 63512 Hainburg (DE); Cavelius, Jörg, 61118 Bad Vilbel (DE); Morawietz, Timm, 66636 Tholey-Überroth (DE); Liebhaber, Markus, 61440 Oberursel (DE)
(74) Vertreter: Keil & Schaafhausen Patentanwälte PartGmbB

(57) **Zusammenfassung**

Blocklageranordnung (1) mit mehreren Behälterstapelräumen (2), einem unterhalb der Behälterstapelräume (2) angeordneten Beschickungsraum (3) und mindestens einem im Beschickungsraum (3) verfahrbaren Beschickungsfahrzeug (10), das eine Hubanordnung aufweist, mit der Behälter (9, 9a, 9b, 9c) von unten in einen Behälterstapelraum (2) einlagerbar und von unten aus dem Behälterstapelraum (2) entnehmbar ist, dadurch gekennzeichnet, dass die Hubanordnung mindestens zwei unabhängig voneinander betätigbare Hubeinrichtungen (12, 13) aufweist.

## Beschreibung

Die vorliegende Erfindung betrifft eine Blocklageranordnung mit mehreren Behälterstapelräumen, einem unterhalb der Behälterstapelräume angeordneten Beschickungsraum und mindestens einem im Beschickungsraum verfahrbaren Beschickungsfahrzeug, das eine Hubanordnung aufweist, mit der Behälter von unten in einen Behälterstapelraum einlagerbar und von unten aus dem Behälterstapelraum entnehmbar ist.

In einer derartigen Blocklageranordnung werden Behälter in Form von Behälterstapeln gelagert. Da die Behälter in einem Behälterstapel unmittelbar aufeinander stehen, lässt sich in Schwerkraftrichtung eine sehr hohe Behälterdichte erreichen und damit ein zur Verfügung stehender Bauraum sehr gut ausnutzen. Die Behälterstapelräume können ebenfalls relativ eng benachbart angeordnet sein. Dementsprechend lässt sich auch quer zur Schwerkraftrichtung eine hohe Behälterdichte erreichen.

Zum Einlagern eines Behälters in einen Behälterstapelraum wird ein Behälter mit Hilfe des Beschickungsfahrzeugs in eine Position unterhalb des gewünschten Behälterstapelraumes verfahren. Die Hubanordnung hebt dann den Behälter an, bis er in den Behälterstapelraum eingeführt wird. Wenn sich bereits andere Behälter in dem Behälterstapelraum befinden, werden diese Behälter durch den neu einzulagernden Behälter angehoben. Der neu eingelagerte Behälter bildet dann den untersten Behälter eines Behälterstapels. Der jeweils unterste Behälter eines Stapels wird von einer Halteeinrichtung gehalten. Das Beschickungsfahrzeug kann dann wieder an eine andere Position verfahren werden. Zum Entnehmen eines Behälters aus dem Behälterstapelraum wird das Beschickungsfahrzeug wieder unterhalb des Behälterstapelraumes positioniert. Die Hubanordnung wird betätigt, um den jeweils untersten Behälter des im Behälterstapelraum befindlichen Behälterstapels anzuheben. Dabei kommt der Behälter von der Halteeinrichtung frei. Der Behälterstapel kann abgesenkt werden, wobei die Halteeinrichtung wieder aktiv wird, um die Behälter, die nicht aus dem Behälterstapelraum entnommen werden sollen, festzuhalten. Wenn der Behälter auf dem Beschickungsfahrzeug weit genug abgesenkt worden ist, kann das Beschickungsfahrzeug wieder verfahren werden, um den Behälter beispielsweise aus dem Beschickungsraum herauszufahren.

In vielen Fällen wird der gewünschte Behälter nicht der unterste Behälter eines Behälterstapels sein. In diesem Fall ist es erforderlich, die nicht benötigten Behälter umzulagern, d.h. solange Behälter aus dem jeweiligen Behälterstapelraum zu entnehmen und in einem anderen Behälterstapelraum unterzubringen, bis der gewünschte Behälter verfügbar ist. Dies kostet eine gewisse Zeit und beeinflusst die Produktivität der Blocklageranordnung in ungünstiger Weise.

Der Erfindung liegt die Aufgabe zugrunde, eine hohe Produktivität einer Blocklageranordnung zu ermöglichen.

Diese Aufgabe wird bei einer Blocklageranordnung der eingangs genannten Art dadurch gelöst, dass die Hubanordnung mindestens zwei unabhängig voneinander betätigbare Hubeinrichtungen aufweist.

Das Beschickungsfahrzeug kann also nicht nur einen Behälter gleichzeitig in einen Behälterstapelraum von unten einführen oder ihn von unten entnehmen, sondern das Beschickungsfahrzeug kann gleichzeitig oder jedenfalls in einem kurzen Zeitraum zwei Behälter in Behälterstapelräume einlagern oder zwei Behälter von dort entnehmen. Allerdings müssen nicht beide Hubeinrichtungen gleichzeitig betätigt werden. Man kann beispielsweise einen Behälter aus einem Behälterstapelraum entnehmen, wobei lediglich eine Hubeinrichtung aktiv ist. Wenn dieser Behälter dann in ausreichender Weise abgesenkt worden ist, wird das Beschickungsfahrzeug nur soweit verfahren, dass die andere Hubeinrichtung unter dem Behälterstapelraum positioniert ist. Die andere Hubeinrichtung kann dann einen weiteren Behälter entnehmen. Die beiden Behälter können dann gemeinsam zu einem anderen Behälterstapelraum verfahren werden, so dass man beim Umstapeln oder Umlagern von Behältern Fahrzeit des Beschickungsfahrzeugs einspart.

Bevorzugterweise ist eine Steuereinrichtung mit den Hubeinrichtungen verbunden, wobei die Steuereinrichtung eine Synchronisier-Einrichtung aufweist. Auf diese Weise ist es möglich, die beiden Hubeinrichtungen auch gleichzeitig anzuheben. Dies ist vor allem dann von Vorteil, wenn man in der Blocklageranordnung Behälter verwendet, die eine Übergröße haben. Derartige Behälter können dann durch beide Hubeinrichtungen gemeinsam angehoben werden, ohne dass sie ihre Ausrichtung senkrecht zur Schwerkraftrichtung verlieren. Die Behälter können also nach wie vor horizontal gehalten werden.

Vorzugsweise ist zwischen jedem Behälterstapelraum und dem Beschickungsraum eine Behälterhalteeinrichtung angeordnet, wobei das Beschickungsfahrzeug für jede Hubeinrichtung eine auf die Behälterhalteeinrichtung wirkende Betätigungsanordnung aufweist. Damit ist das Beschickungsfahrzeug in der Lage, die Behälterhalteeinrichtung für jeden Behälterstapelraum separat zu öffnen. Damit lässt sich das Einlagern und das Entnehmen von Behältern für jeden Behälterstapelraum einzeln steuern.

Vorzugsweise weist jede Betätigungseinrichtung mindestens einen in eine Richtung vom Beschickungsraum zu einem Behälterstapelraum bewegbaren Träger auf, der zwei mit Abstand zueinander angeordnete Betätigungselemente aufweist. Diese Betätigungselemente werden dann von dem Träger gemeinsam bewegt, so dass sie gleichzeitig verschiedene Elemente der Behältereinrichtung betätigen können, um die Behälterhalteeinrichtung zu öffnen. Eine andere Synchronisierung dieser Öffnungsbewegung ist nicht erforderlich. Der Träger ist eine relativ einfache konstruktive Lösung.

Bevorzugterweise weist der Träger eine Oberseite und eine Unterseite auf, wobei sich ein Abstand zwischen der Oberseite und der Unterseite über die Länge des Trägers verändert. Die Oberseite befindet sich in Schwerkraftrichtung oben und die Unterseite befindet sich in Schwerkraftrichtung unten. Wenn sich der Abstand verändert, kann der Träger beispielsweise eine horizontal verlaufende Oberseite und eine geneigte Unterseite aufweisen. Damit lässt sich die Masse des Trägers kleinhalten.

Vorzugsweise ist jede Betätigungseinrichtung an einem Stirnwandelement des Beschickungsfahrzeugs angeordnet. An dem Stirnseitenelement kann dann auch ein Antrieb für die Betätigungseinrichtung vorgesehen sein. Die Betätigungseinrichtung ragt dann von dem Stirnwandelement weg in Richtung auf das andere Ende des Beschickungsfahrzeugs, also in Richtung auf ein anderes Stirnwandelement. Damit lässt sich der für das Beschickungsfahrzeug benötigte Bauraum kleinhalten.

Vorzugsweise weist jeder Behälterstapelraum eine Mittelachse auf und die Hubeinrichtungen weisen jeweils einen Mittelpunkt in einer Ebene senkrecht zur Schwerkraftrichtung auf, wobei ein Abstand zwischen den Mittelpunkten der Hubeinrichtungen einem Abstand der Mittelachsen entspricht. Wenn das Beschickungsfahrzeug so positioniert ist, dass eine Hubeinrichtung sich genau unter einem Behälterstapelraum befindet, dann befindet sich die andere Hubeinrichtung des Beschickungsfahrzeugs ebenfalls genau unter einem anderen Behälterstapelraum. Damit ist ein gleichzeitiges Beschicken oder Entleeren von zwei nebeneinander angeordneten Behälterstapelräumen möglich. Vorzugsweise weist die Hubeinrichtung einen in Draufsicht rechteckigen Behälteraufnahmeraum mit einer Längsseite und einer Querseite, die kürzer als die Längsseite ist, auf, wobei die Längsseiten benachbarter Behälteraufnahmeräume einander benachbart angeordnet sind. Die Behälter werden dann mit ihren längeren Längsseiten parallel zueinander in dem Beschickungsfahrzeug aufgenommen. Die Länge des Beschickungsfahrzeugs kann dann kurzgehalten werden.

Vorzugsweise ist zwischen dem Beschickungsraum und den Behälterstapelräumen eine Rahmenanordnung angeordnet, wobei benachbarte Behälteraufnahmeräume einen Abstand zueinander aufweisen, der mindestens so groß ist wie eine Dicke der Rahmenanordnung an den Längsseiten. Damit können zwei Behälter gleichzeitig in die Behälterstapelräume eingelagert werden. Die Behälter werden dann an der Rahmenanordnung vorbeigeführt.

Vorzugsweise sind in den Behälterstapelräumen mehrere gleichartige Behälter angeordnet, wobei die Behälteraufnahmeräume eine Höhe aufweisen, die der Höhe von mindestens zwei aufeinander gestapelten Behältern entspricht. Das Beschickungsfahrzeug kann also zwei aufeinandergestapelte Behälter aufnehmen und transportieren. Der Beschickungsraum weist eine entsprechende Höhe auf. Das Beschickungsfahrzeug kann, weil es bereits zwei Hubeinrichtungen aufweist, dann insgesamt vier (bei einer Stapelhöhe von zwei Behältern) oder mehr Behältern aufnehmen, so dass Transportzeiten beim Umstapeln oder Umlagern von Behältern kleingehalten und die Produktivität der Blocklageranordnung groß gemacht werden kann. Auch beim Entnehmen von Behältern aus der Blocklageranordnung oder beim Einlagern von Behältern in die Blocklageranordnung kann die gleichzeitige Handhabung von mehr als zwei Behältern Vorteile im Hinblick auf die benötigte Zeit haben.

Die Erfindung wird im Folgenden anhand eines bevorzugten Ausführungsbeispiels in Verbindung mit der Zeichnung beschrieben. Hierin zeigen:
- Fig. 1: eine schematisierte Darstellung einer Blocklageranordnung,
- Fig. 2: ein Beschickungsfahrzeug,
- Fig. 3: ein Beschickungsfahrzeug mit mehreren Behältern,
- Fig. 4: das Beschickungsfahrzeug mit den Behältern in teilweise angehobener Position,

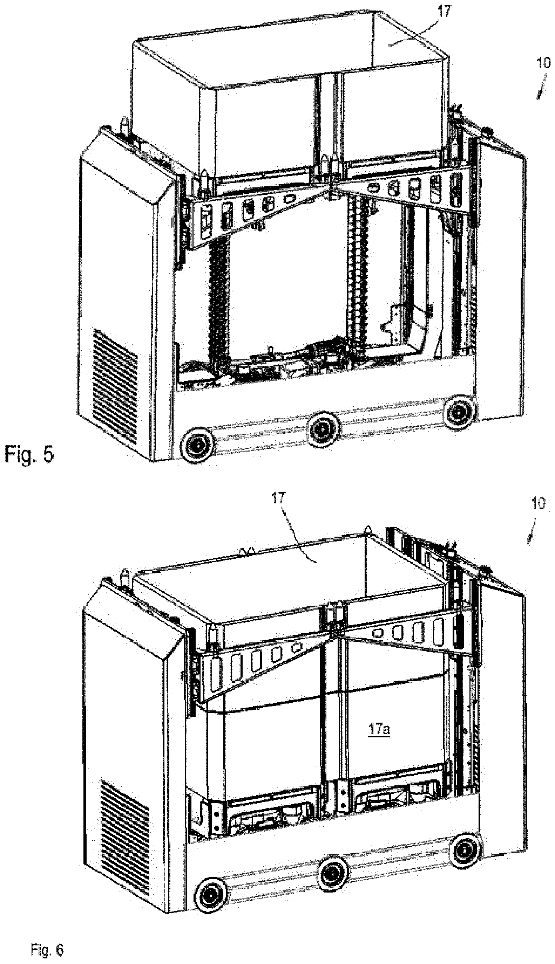

- Fig. 5: das Beschickungsfahrzeug mit einem großen Behälter in angehobener Position, und
- Fig. 6: das Beschickungsfahrzeug mit zwei großen Behältern in abgesenkter Position.

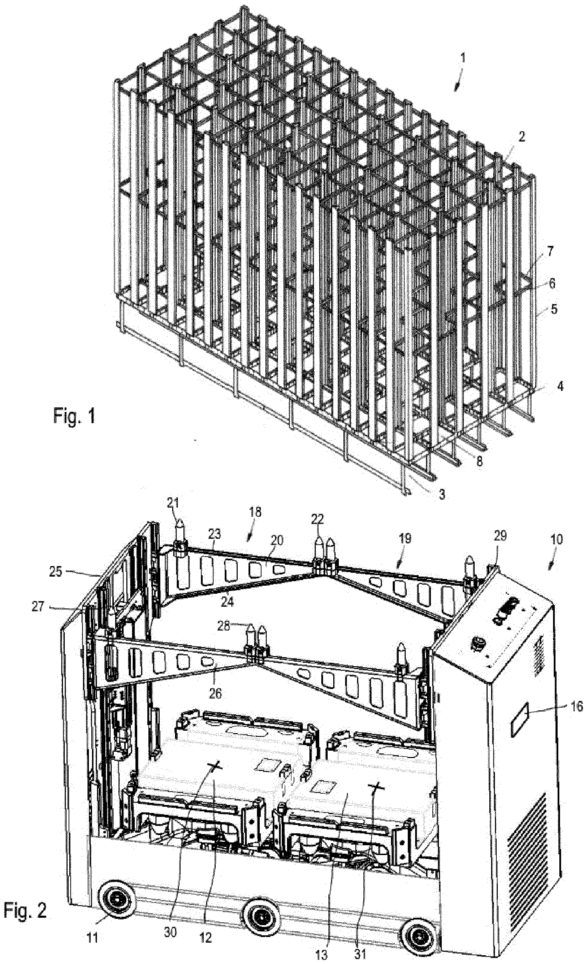

Fig. 1 zeigt stark schematisiert eine Blocklageranordnung 1, die auch als Stapellageranordnung bezeichnet werden kann. Die Blocklageranordnung 1 weist mehrere Behälterstapelräume 2 und einen Beschickungsraum 3 auf, der unterhalb der Behälterstapelräume 2 angeordnet ist. Zwischen den Behälterstapelräumen 2 und dem Beschickungsraum 3 ist eine Rahmenanordnung 4 angeordnet. Auf der Rahmenanordnung 4 sind Ständer 5 angeordnet, die mit einem Abstand zur Rahmenanordnung 4 durch Querstreben 6 und Längsstreben 7 miteinander verbunden sind.

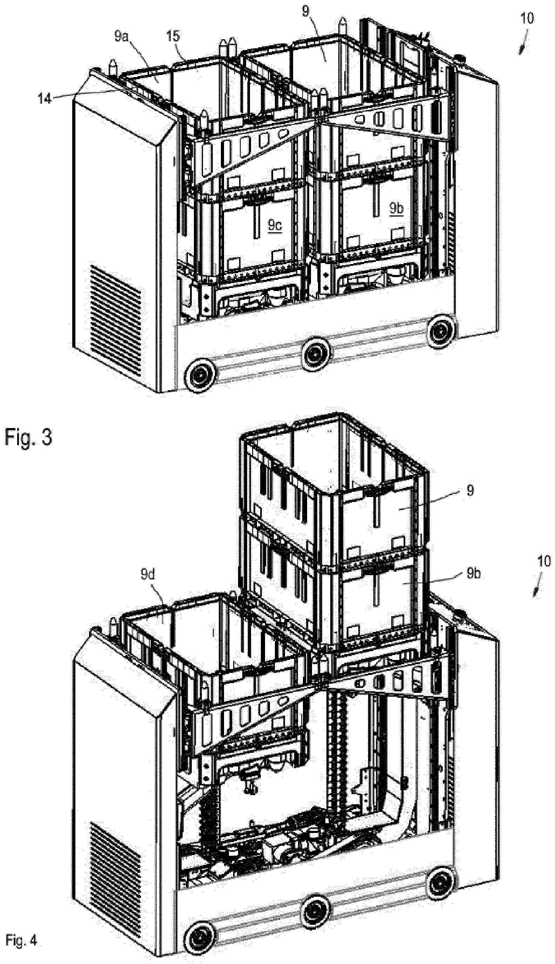

Die Rahmenanordnung 4 weist für jeden Behälterstapelraum 2 eine Öffnung 8 auf, durch die der Behälterstapelraum 2 mit dem Beschickungsraum 3 in Verbindung steht. In jeder Öffnung 8 ist in nicht näher dargestellter Weise eine Halteeinrichtung angeordnet, mit der ein Behälter 9 (Fig. 3 und 4) in dem Behälterstapelraum 2 festgehalten werden kann.

Die Blocklageranordnung 1 wird von unten beschickt, d.h. ein Behälter 9 wird durch den Beschickungsraum 3 bis in eine Position verfahren, die sich unterhalb eines Behälterstapelraums 2 befindet. Der Behälter 9 wird dann von unten in den Behälterstapelraum 2 eingebracht, indem er angehoben wird. Der Behälter 9 wird dann durch die in der Öffnung 8 angeordnete Halteeinrichtung festgehalten, so dass er sich in einem ausreichenden Abstand zum Boden des Beschickungsraums 3 befindet. Wenn sich bereits ein Behälter oder ein Stapel von Behältern im Behälterstapelraum 2 befindet, dann wird der Stapel mitangehoben und der neu eingelagerte Behälter 9 bildet dann den untersten Behälter 9 dieses Stapels.

Die Entnahme eines Behälters 9 aus einem Behälterstapelraum erfolgt in umgekehrter Richtung. Der unterste Behälter 9 eines Behälterstapels wird angehoben, bis er von der Halteeinrichtung in der Öffnung 8 freikommt. Danach kann der Behälter 9, ggfs. mit mehreren darauf befindlichen Behältern, abgesenkt werden, wobei die Halteeinrichtung dann den nächsten oder übernächsten Behälter wieder festhalten kann, was weiter unten näher beschrieben wird, so dass nur der unterste Behälter 9 oder die beiden untersten Behälter aus dem Behälterstapelraum 2 entnommen wird. Der entnommene Behälter 9 wird dann aus dem Beschickungsraum 3 herausgefahren, um ihn weiter handhaben zu können.

Die Handhabung des Behälters 9 im Beschickungsraum 3, also das Verfahren des Behälters 9 in die gewünschte Position unterhalb des Behälterstapelraums 2, erfolgt mit Hilfe eines in Fig. 2 dargestellten Beschickungsfahrzeugs 10.

Das Beschickungsfahrzeug 10 weist mehrere Räder 11 auf, mit denen es auf dem Boden des Beschickungsraums 3 verfahren werden kann. Weitere nicht näher dargestellte Räder können vorgesehen sein, um das Beschickungsfahrzeug 10 nicht nur in eine einzige Richtung, sondern auch quer zu dieser einzigen Richtung verfahren zu können.

Das Beschickungsfahrzeug 10 weist zwei Hubeinrichtungen 12, 13 auf, die unabhängig voneinander betätigt werden können. Um die nachfolgende Erläuterung zu vereinfachen, wird oberhalb einer jeden Hubeinrichtung 12, 13 ein Behälteraufnahmeraum definiert, in dem ein Behälter 9 angeordnet werden kann. Der Behälteraufnahmeraum muss nicht physisch begrenzt sein. im abgesenkten Zustand der Hubeinrichtungen 12, 13 befinden sich die Behälteraufnahmeräume aber innerhalb des Beschickungsfahrzeugs 10.

Wie man anhand von Fig. 3 und 4 erkennen kann, weist jeder Behälteraufnahmeraum eine Längsseite auf, die einer Längsseite 14 eines Behälters 9 entspricht, und eine Querseite, die einer Querseite 15 des Behälters 9 entspricht. Die Längsseite 14 ist dabei länger als die Querseite 15. Die Behälter 9 sind mit ihren Längsseiten 14 parallel zueinander im Beschickungsfahrzeug 10 angeordnet. Dementsprechend haben auch die Behälteraufnahmeräume eine Längsseite und eine Querseite, wobei die Querseite kürzer als die Längsseite ist und die Längsseiten benachbarter Behälteraufnahmeräume und damit die Längsseiten benachbarter Hubeinrichtungen 12, 13 einander benachbart angeordnet sind.

Das Beschickungsfahrzeug weist eine Steuereinrichtung 16 auf, die mit den Hubeinrichtungen 12, 13 verbunden ist. Die Steuereinrichtung 16 weist eine Synchronisiereinrichtung auf, so dass die Hubeinrichtungen 12, 13 nicht nur unabhängig voneinander bewegt werden können, also unabhängig voneinander angehoben oder abgesenkt werden können, sondern auch gemeinsam angehoben und abgesenkt werden können. Damit ist es beispielsweise möglich, auch einen Behälter 17, der etwa die doppelte Größe eines Behälters 9 aufweist, mit dem Beschickungsfahrzeug 10 zu handhaben, wobei die Blocklageranordnung 1 dann mit entsprechend großen Behälteraufnahmeräumen 2 versehen ist (nicht dargestellt).

Wie oben erwähnt, ist in der Öffnung 8 (oder an anderer Stelle) zwischen jedem Behälterstapelraum 2 und dem Beschickungsraum 3 eine Behälterhalteeinrichtung angeordnet. Das Beschickungsfahrzeug 10 weist für jede Hubeinrichtung 12, 13 eine auf die Behälterhalteeinrichtung wirkende Betätigungsanordnung 18, 19 auf. Die Betätigungsanordnung 18 weist einen Träger 20 auf, an dem zwei mit Abstand zueinander angeordnete Betätigungselemente 21, 22 angeordnet sind. Der Träger 18 weist eine Oberseite 23 und eine Unterseite 24 auf, wobei sich ein Abstand zwischen der Oberseite 23 und der Unterseite 24 über der Länge des Trägers 20 verändert. Die Betätigungseinrichtung 18 ist an einem Stirnwandelement 25 des Beschickungsfahrzeugs 10 angeordnet. Der Träger 20 verjüngt sich vom Stirnwandelement 25 weg.

Die Betätigungsanordnung 18 weist einen zweiten Träger 26 mit Betätigungselementen 27, 28 auf, wobei der zweite Träger 26 genauso ausgebildet ist, wie der erste Träger 20.

Die zweite Betätigungsanordnung 19 ist genauso aufgebaut, wie die erste Betätigungsanordnung 18, allerdings spiegelverkehrt zu der ersten Betätigungsanordnung 18 angeordnet. Die zweite Betätigungsanordnung 19 ist an einem zweiten Stirnwandelement 29 des Beschickungsfahrzeugs 10 angeordnet.

Jeder Behälterstapelraum 2 weist eine Mittelachse auf. Die Mittelachse eines Behälterstapelraums 2 ist dort angeordnet, wo sich die Diagonalen der Öffnung 8 kreuzen. Die Hubeinrichtungen 12, 13 weisen jeweils einen Mittelpunkt 30, 31 in einer Ebene senkrecht zur Schwerkraftrichtung auf, wobei ein Abstand zwischen den Mittelpunkten 30, 31 der Hubeinrichtung einem Abstand der Mittelachsen entspricht.

Wenn also das Beschickungsfahrzeug 10 im Beschickungsraum 3 so positioniert ist, dass sich eine Hubeinrichtung 12 genau unter einem Behälterstapelraum 2 befindet, dann befindet sich die Hubeinrichtung 13 genau unter einem benachbarten Behälterstapelraum 2, so dass gleichzeitig zwei Behälter 9 in benachbarte Behälterstapelräume 2 eingelagert oder aus benachbarten Behälterstapelräumen 2 entnommen werden können.

Die Hubeinrichtungen 12, 13 weisen einen gewissen Abstand zueinander auf. Dementsprechend weisen auch die Behälteraufnahmeräume einen Abstand zueinander auf, was man beispielsweise in Fig. 3 erkennen kann, wo Behälter 9 in den Behälteraufnahmeräumen angeordnet sind. Der Abstand der Behälteraufnahmeräume ist mindestens so groß, wie eine Dicke der Rahmenanordnung 4 an den Längsseiten 14 der Behälterstapelräume 2. Dementsprechend ist eine Einlagerung oder eine Entnahme der Behälter 9 aus den Behälterstapelräumen 2 möglich, ohne dass eine Bewegung der Behälter 9 in die oder aus den Behälterstapelräumen 2 durch die Rahmenanordnung 4 behindert wird.

Wie man in Fig. 3 erkennen kann, weisen die Behälteraufnahmeräume eine Höhe auf, die der Höhe von mindestens zwei aufeinander gestapelten Behältern 9, 9b; 9a, 9c entspricht. Wenn das Beschickungsfahrzeug 10 in Schwerkraftrichtung höher ausgebildet ist, lassen sich auch Stapel von mehr als zwei Behältern 9, 9a, 9b, 9c in den Behälteraufnahmeräumen unterbringen. Im in Fig. 3 dargestellten Ausführungsbeispiel kann das Beschickungsfahrzeug 10 insgesamt vier Behälter 9, 9a, 9b, 9c transportieren.

In Fig. 4 ist eine Situation dargestellt, in der ein Stapel aus zwei Behältern 9, 9b angehoben worden ist, beispielsweise um diesen Stapel aus zwei Behältern 9, 9b in einer Bewegung in einen Behälterstapelraum 2 einzubringen oder die beiden Behälter 9, 9b in einer Bewegung aus dem Behälterstapelraum 2 zu entnehmen. Ein benachbarter Behälter 9a wird dabei in einer Position gehalten, wo er sich unmittelbar unterhalb der Rahmenanordnung 4 befindet, so dass er, sobald das Beschickungsfahrzeug 10 die gewünschte Position unterhalb eines Behälterstapelraums 2 erreicht hat, in den Behälterstapelraum 2 eingebracht werden kann.

Wie oben erwähnt, sind die beiden Hubeinrichtungen 12, 13 auch miteinander synchronisierbar, so dass sie einen größeren Behälter 17 gemeinsam anheben oder absenken können. Auch hier ist es möglich, zwei Behälter 17, 17a in Form eines Stapels gemeinsam auf dem Beschickungsfahrzeug 10 zu transportieren.

## Patentansprüche

1. Blocklageranordnung (1) mit mehreren Behälterstapelräumen (2), einem unterhalb der Behälterstapelräume (2) angeordneten Beschickungsraum (3) und mindestens einem im Beschickungsraum (3) verfahrbaren Beschickungsfahrzeug (10), das eine Hubanordnung aufweist, mit der Behälter (9, 9a, 9b, 9c) von unten in einen Behälterstapelraum (2) einlagerbar und von unten aus dem Behälterstapelraum (2) entnehmbar ist, **dadurch gekennzeichnet, dass** die Hubanordnung mindestens zwei unabhängig voneinander betätigbare Hubeinrichtungen (12, 13) aufweist.

2. Blocklageranordnung nach Anspruch 1, **dadurch gekennzeichnet, dass** eine Steuereinrichtung (16) mit den Hubeinrichtungen (12, 13) verbunden ist, wobei die Steuereinrichtung (16) eine Synchronisiereinrichtung aufweist.

3. Blocklageranordnung nach Anspruch 1 oder 2, **dadurch gekennzeichnet, dass** zwischen jedem Behälterstapelraum (2) und dem Beschickungsraum (3) eine Behälterhalteeinrichtung angeordnet ist, wobei das Beschickungsfahrzeug (10) für jede Hubeinrichtung (12, 13) eine auf die Behälterhalteeinrichtung wirkende Betätigungsanordnung (18, 19) aufweist.

4. Blocklageranordnung nach Anspruch 3, **dadurch gekennzeichnet, dass** jede Betätigungseinrichtung (18, 19) mindestens einen in eine Richtung vom Beschickungsraum (3) zu einem Behälterstapelraum (2) bewegbaren Träger (20, 26) aufweist, der zwei mit Abstand zueinander angeordnete Betätigungselemente (21, 22; 27, 28) aufweist.

5. Blocklageranordnung nach Anspruch 4, **dadurch gekennzeichnet, dass** der Träger (20, 26) eine Oberseite (23) und eine Unterseite (24) aufweist, wobei sich ein Abstand zwischen der Oberseite (23) und der Unterseite (24) über die Länge des Trägers (20, 26) verändert.

6. Blocklageranordnung nach einem der Ansprüche 3 bis 5, **dadurch gekennzeichnet, dass** jede Betätigungseinrichtung (18, 19) an einem Stirnwandelement (25, 29) des Beschickungsfahrzeugs (10) angeordnet ist.

7. Blocklageranordnung nach einem der Ansprüche 1 bis 6, **dadurch gekennzeichnet, dass** jeder Behälterstapelraum (2) eine Mittelachse aufweist und die Hubeinrichtungen (12, 13) jeweils einen Mittelpunkt (30, 31) in einer Ebene senkrecht zur Schwerkraftrichtung aufweisen, wobei ein Abstand zwischen den Mittelpunkten (30, 31) der Hubeinrichtungen (12, 13) einem Abstand der Mittelachsen entspricht.

8. Blocklageranordnung nach einem der Ansprüche 1 bis 7, **dadurch gekennzeichnet, dass** jede Hubeinrichtung (12, 13) einen in Draufsicht rechteckigen Behälteraufnahmeraum mit einer Längsseite und eine Querseite, die kürzer als die Längsseite ist, aufweist, wobei die Längsseiten benachbarter Hubeinrichtungen (12, 13) einander benachbart angeordnet sind.

9. Blocklageranordnung nach Anspruch 8, **dadurch gekennzeichnet, dass** zwischen dem Beschickungsraum (3) und den Behälterstapelräumen (2) eine Rahmenanordnung (4) angeordnet ist, wobei benachbarte Behälteraufnahmeräume einen Abstand zueinander aufweisen, der mindestens so groß ist, wie eine Dicke der Rahmenanordnung (4) an den Längsseiten.

10. Blocklageranordnung nach Anspruch 8 oder 9, **dadurch gekennzeichnet, dass** in den Behälterstapelräumen (2) mehrere gleichartige Behälter (9, 9a, 9b, 9c; 17, 17a) angeordnet sind, wobei die Behälteraufnahmeräume eine Höhe aufweisen, die der Höhe von mindestens zwei aufeinandergestapelten Behältern (9, 9a, 9b, 9c; 17, 17a) entspricht.
